# EUROPEAN PATENT APPLICATION

(11) **EP 4 607 997 A1**
(43) Date of publication of application: **27.08.2025**
(21) Application number: 25160341.1
(22) Date of filing: 26.02.2025
(51) Int. Cl.: H04W 24/10, H04B 17/318, H04W 24/08

(54) **AUTOMATED RADIO FREQUENCY SITE SURVEYS**

(30) Priority: 26.02.2024 US 202463558077 P; 21.02.2025 US 202519059703
(71) Applicant: Omnifi Inc., Pleasanton, CA 94566 (US)
(72) Inventor: EPSTEIN, Joseph Alan, Pleasanton (US)
(74) Representative: Mewburn Ellis LLP

(57) **Abstract**

In one embodiment, a method for performing a radio frequency (RF) site survey includes detecting a physical location of a client device based on RF state information from one or more wireless networking access points, creating and storing location data representing the physical location of the client device, integrating network link quality information and the location data to derive a channel quality value representing a quality of an RF communication channel at the physical location, and generating a first map correlating the physical location with a signal strength based on the channel quality value associated with the physical location.

## Description

### COPYRIGHT NOTICE

A portion of the disclosure of this patent document contains material that is subject to copyright protection. The copyright owner has no objection to the facsimile reproduction by anyone of the patent document or the patent disclosure, as it appears in the Patent and Trademark Office patent file or records, but otherwise reserves all copyright or rights. ^{©} 2024 Omnifi Inc.

### CROSS-REFERENCE TO RELATED APPLICATIONS

This application claims priority under the Paris Convention from U.S. application 19/059,703, filed 21 February 2025, which claims the benefit under 35 U.S.C. § 119(e) of provisional application 63/558,077, filed 26 February 2024, the entire contents of which are hereby incorporated herein by reference for all purposes as if fully set forth herein.

### TECHNICAL FIELD

One technical field of the present disclosure is deploying wireless networks. Another technical field is site surveys in wireless network deployment.

### BACKGROUND

The approaches described in this section are approaches that could be pursued but not necessarily approaches that have been previously conceived or pursued. Therefore, unless otherwise indicated, it should not be assumed that any of the approaches described in this section qualify as prior art merely by virtue of their inclusion in this section.

One of the most expensive and painful parts of deploying large wireless networks, such as Wi-Fi, is the performance of a site survey. A site survey is a mapping of the physical space in which the network is deployed, measuring the wireless response in each area. Many site surveys work by a person walking about the installation space with a laptop or other device running a site survey tool. As they walk, they input, into a floorplan, data indicating where they are on the floor (either once or repeatedly; sometimes dead reckoning or GPS is used to reduce the times the user has to input their location into the floorplan), and the site survey tool uses the radio on the device to measure a Radio Strength Signal Indication (RSSI) or other signal traits at various locations. This can be used to analyze how the signal propagates through the environment, showing where the signal is attenuated or otherwise altered compared to expectations based on free space path loss.

The primary purpose of a site survey is to find coverage holes or areas of reduced coverage compared to the ideal. These coverage holes cause the physical data rate-based on the SNR usually-to drop to a point where they are below the design criteria for the network, sometimes rendering the network unusable. Coverage is reduced when the signal from an access point is attenuated by physical objects, manifesting as weaker signal strength and lower SNR. Other impairments can also be measured, including higher multipath, lower actual throughput from a data measuring tool (such as *iperf3*)*,* or indirect measurements that hint at this.

Site surveys can be performed on an operating network, where the site survey tool is the only tool needed. They can also be conducted before a network is deployed, where the surveyor brings a sample access point, which they place in different locations, and repeats parts or all of the survey to understand the optimal location to set a new access point.

The survey is also conducted using additional stationary measuring devices in some prior approaches. These typically come in "night light" form factors or similar that plug into free outlets and emulate clients as a part of a service assurance strategy. The unfortunate parts of site surveys are twofold:
1. Performing the survey is a costly affair, with the manual parts requiring a person to move the device or other tool, and automated systems require deploying a field of extra-solution stationary measuring devices and
2. Even if one had an accurate site survey, fixing problems such as coverage holes requires additional work to move or add access points, including finding cable routes to feed them and providing network resources such as PoE switch ports.

Based on the foregoing, the referenced technical fields have developed an acute need for better methods to reduce the impact of the site survey and be able to take action to resolve issues.

### SUMMARY

The appended claims may serve as a summary of the invention.

### BRIEF DESCRIPTION OF THE DRAWINGS

In the drawings:
FIG. 1 illustrates an integration of an automated locationing system and a surveying system.
FIG. 2 illustrates an example of trilateration with range and error.
FIG. 3 illustrates an example of infeasible measurements.
FIG. 4 illustrates an example automated surveying system.
FIG. 5 illustrates an example system with an oracle.
FIG. 6 illustrates an example of a variational autoencoder (VAE) oracle architecture that could implement one embodiment.
FIG. 7 illustrates an example visualization of the clustering of the latent space for an autoencoder.
FIG. 8 illustrates example locations of sample points that generate the RF space through a known channel model.
FIG. 9 illustrates an example of a cross-trained VAE with location.
FIG. 10 illustrates an example system with a remote predictor.
FIG. 11 illustrates an example relocation of the predictor to the user interface.
FIG. 12 illustrates a computer system that could implement one embodiment.

### DETAILED DESCRIPTION

In the following description, numerous specific details are set forth to provide a thorough understanding of the present invention. It will be apparent, however, that the present invention may be practiced without these specific details. In other instances, well-known structures and devices are shown in block diagram form to avoid unnecessarily obscuring the present invention.

The text of this disclosure, in combination with the drawing figures, is intended to state in prose the algorithms that are necessary to program the computer to implement the claimed inventions at the same level of detail that is used by people of skill in the arts to which this disclosure pertains to communicate with one another concerning functions to be programmed, inputs, transformations, outputs and other aspects of programming. That is, the level of detail set forth in this disclosure is the same level of detail that persons of skill in the art normally use to communicate with one another to express algorithms to be programmed or the structure and function of programs to implement the inventions claimed herein.

This disclosure may describe one or more different inventions, with alternative embodiments to illustrate examples. Other embodiments may be utilized, and structural, logical, software, electrical, and other changes may be made without departing from the scope of the particular inventions. Various modifications and alterations are possible and expected. Some features of one or more of the inventions may be described with reference to one or more particular embodiments or drawing figures, but such features are not limited to usage in the one or more particular embodiments or figures with reference to which they are described. Thus, the present disclosure is neither a literal description of all embodiments of one or more inventions nor a listing of features of one or more inventions that must be present in all embodiments.

Headings of sections and the title are provided for convenience but are not intended to limit the disclosure in any way or as a basis for interpreting the claims. Devices described as in communication with each other need not be in continuous communication with each other unless expressly specified otherwise. In addition, devices that communicate with each other may communicate directly or indirectly through one or more intermediaries, logical or physical.

A description of an embodiment with several components in communication with one other does not imply that all such components are required. Optional components may be described to illustrate a variety of possible embodiments and to illustrate one or more aspects of the inventions fully. Similarly, although process steps, method steps, algorithms, or the like may be described in sequential order, such processes, methods, and algorithms may generally be configured to work in different orders unless specifically stated to the contrary. Any sequence or order of steps described in this disclosure is not a required sequence or order. The steps of the described processes may be performed in any order practical. Further, some steps may be performed simultaneously. The illustration of a process in a drawing does not exclude variations and modifications, does not imply that the process or any of its steps are necessary to one or more of the invention(s), and does not imply that the illustrated process is preferred. The steps may be described once per embodiment but need not occur only once. Some steps may be omitted in some embodiments or occurrences, or some steps may be executed more than once in a given embodiment or occurrence. When a single device or article is described, more than one device or article may be used in place of a single device or article. Where more than one device or article is described, a single device or article may be used instead of more than one device or article.

The functionality or features of a device may be alternatively embodied by one or more other devices that are not explicitly described as having such functionality or features. Thus, other embodiments of one or more inventions need not include the device itself. Techniques and mechanisms described or referenced herein will sometimes be described in singular form for clarity. However, it should be noted that particular embodiments include multiple iterations of a technique or manifestations of a mechanism unless noted otherwise. Process descriptions or blocks in figures should be understood as representing modules, segments, or portions of code, including one or more executable instructions for implementing specific logical functions or steps in the process. Alternate implementations are included within the scope of embodiments of the present invention in which, for example, functions may be executed out of order from that shown or discussed, including substantially concurrently or in reverse order, depending on the functionality involved.

### 1. GENERAL OVERVIEW

In one embodiment, an automated surveying system can utilize multiple methods to reduce the impact of the site survey and be able to take action to resolve issues. In an embodiment, the disclosure provides a computer-implemented method executed at a computer system and comprising: using the computer system, detecting a physical location of a client device based on RF state information from one or more wireless networking access points; by the computer system, creating and storing location data representing the physical location of the client device; by the computer system, integrating network link quality information and the location data to derive a channel quality value representing a quality of an RF communication channel at the physical location; and by the computer system, generating a first map correlating the physical location with a signal strength based on the channel quality value associated with the physical location.

In some embodiments, the computer-implemented method further includes, by the computer system, detecting the physical location of the client device based on one or more of RF fingerprinting, ranging, or information from the client device.

In some embodiments, the computer-implemented method further includes, by the computer system, deriving the channel quality value at the physical location based on one or more of channel state information, a ranging estimate, a received signal strength indicator (RSSI) estimate, an RSSI budget, a link budget, a data rate associated with the client device, a maximum data rate associated with downstream traffic from the client device, or survey information from the client device.

In some embodiments, the computer-implemented method further includes, by the computer system, correlating the physical location with the signal strength using an oracle comprising a programmed digital electronic computing device, wherein the oracle subsumes the channel quality and wherein the oracle is configured for an ensemble of a particular measurement.

In some embodiments, the link quality information is partial. The computer-implemented method further includes, by the computer system, completing the partial link quality information based on one or more of a neighboring algorithm or a machine-learning algorithm.

In some embodiments, the computer-implemented method further includes, by the computer system, completing the partial link quality information by executing an inference stage of a trained machine-learning model over the link quality information, wherein the trained machine-learning model comprises an autoencoder.

In some embodiments, the computer-implemented method further includes, by the computer system, generating a second map comprising attenuation against the signal strength.

In some embodiments, the computer-implemented method further includes, by the computer system, displaying the first map via a user interface executing on a monitoring system. The computer-implemented method may be embodied in one or more non-transitory computer-readable storage media storing one or more sequences of instructions which, when executed using one or more processors, cause the one or more processors to perform the computer-implemented method as disclosed above and herein, including any one or any combination insofar as they are compatible of the optional features set out with reference thereto. A further embodiment of the disclosure provides a computer system for performing a radio frequency site survey, comprising: one or more central processing units; one or more network interfaces that are configured to communicatively couple the one or more central processing units to a data communication network; and electronic digital random access memory storing a plurality of sequences of stored program instructions being programmed to cause the computer system to perform the computer-implemented method as disclosed above and herein, including any one or any combination insofar as they are compatible of the optional features set out with reference thereto.

More information on site surveys may be found in PCT Patent Application No. WO2021092018, filed 04 November 2020, the entire contents of which are hereby incorporated by reference for all purposes as if fully set forth herein.

### 2. STRUCTURAL & FUNCTIONAL OVERVIEW

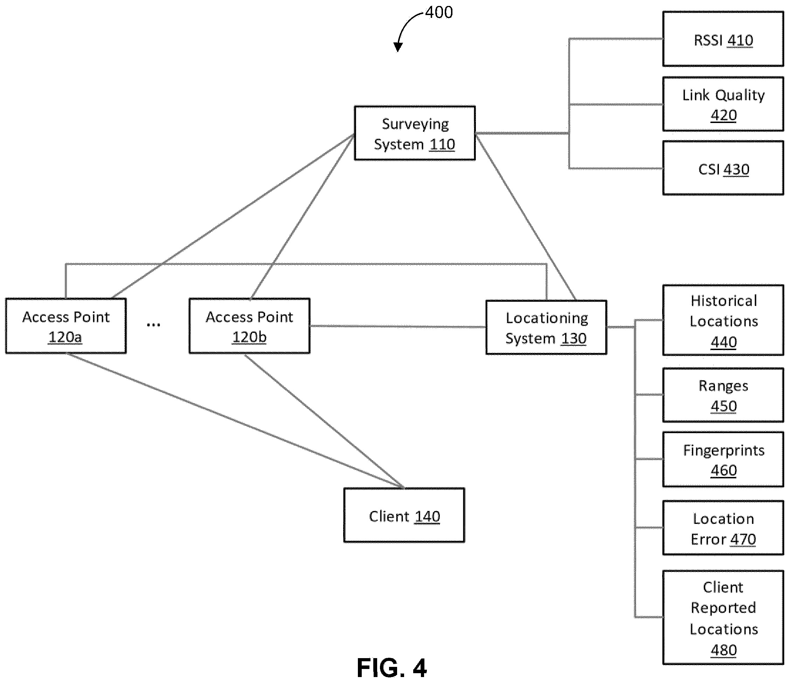

FIG. 4, FIG. 5, FIG. 6, FIG. 9, FIG. 10, FIG. 11, and FIG. 12 illustrate examples of automated surveying systems, showing the context of use and principal functional elements with which one embodiment could be implemented. In an embodiment, each system comprises components implemented partially by hardware at one or more computing devices, such as one or more hardware processors executing stored program instructions stored in one or more memories for performing the functions described herein. In other words, all functions described herein are intended to indicate operations performed using programming in a special or general-purpose computer in various embodiments. The drawing figures illustrate only one of many possible arrangements of components configured to execute the programming described herein. Other arrangements may include fewer or different components, and the division of work between the components may vary depending on the arrangement.

FIG. 4, FIG. 5, FIG. 6, FIG. 9, FIG. 10, FIG. 11, and FIG. 12, and the other drawing figures and all of the description and claims in this disclosure, are intended to present, disclose, and claim a technical system and technical methods in which specially programmed computers, using a special-purpose distributed computer system design, execute functions that have not been available before to provide a practical application of computing technology to the problem of site surveying in deploying wireless networks. In this manner, the disclosure presents a technical solution to a technical problem, and any interpretation of the disclosure or claims to cover any judicial exception to patent eligibility, such as an abstract idea, mental process, method of organizing human activity, or mathematical algorithm, has no support in this disclosure and is erroneous.

Certain drawing figures may illustrate example processes. Each process or flow diagram herein is intended as an illustration of the functional level at which skilled persons, in the art to which this disclosure pertains, communicate with one another to describe and implement a computer-implemented method, as described further herein and/or algorithms using programming. The flow diagrams are not intended to illustrate every instruction, method object, or sub-step that would be needed to program every aspect of a working program but are provided at the same functional level of illustration that is normally used at the high level of skill in this art to communicate the basis of developing working programs.

### 2.1 LOCATIONING

One of the key requirements of a site survey-and where it gains value over a typical adjacency matrix gathered by scanning from access points directly and/or supplemented by client information-is that it knows where the transmitter and receiver are in physical space. This allows the survey to detect the change in path loss over baseline for that pair and deduce the presence of significant attenuators.

However, if the survey system were to no longer need to be provided manually or through GPS (which does not work well indoors), the location of the survey device, then the survey device itself could be reduced to a far simpler one.

One way to do this is for the network to determine the location of the survey device when the device to access point measurement is taken.

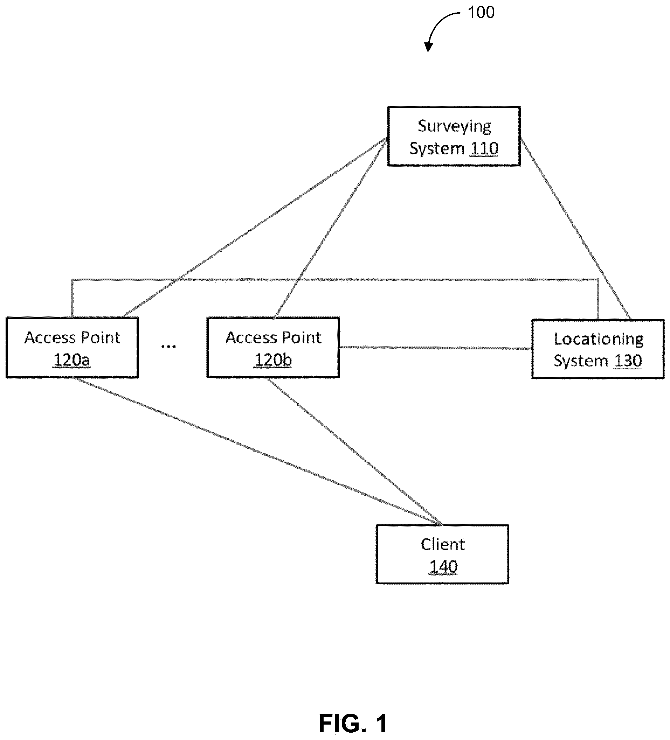

FIG. 1 illustrates an integration 100 of an automated locationing system and a surveying system. A surveying system 110 is connected to a locationing system 130 and one or more access points 120 and/or one or more survey/assurance nodes. (For simplicity, this disclosure will continue to refer to the nodes entirely as access points 120, being aware that survey/assurance nodes often do not provide wireline access, as they are instead small, typically night-light form factor devices that participate in telemetry generating and act like fake clients, but do not carry real data. In the following embodiments, assurance nodes can be used as both access points 120 for telemetry and clients 140 for creating training. Furthermore, some access points 120 intended for access use may be set to telemetry mode and act like survey nodes for power or density management reasons.) The locationing system 130 is connected to the access points 120 as well.

A client 140 is present in the space with the access points 120. (In some embodiments, the client 140 is replaced with a device that is not required to act in client mode but can participate in the measurements, including locations.)

The locationing system 130 is used to detect the location of the client 140, but with some errors. Essentially, the locationing system 130 is provided with RF state from the access points 120 about the client 140 and derives a location in physical space. Multiple locationing techniques are available.

### 2.2 FINGERPRINTING

In this context, broadly defined, an RF fingerprint comprises digital data that someone obtains by standing at a specific location and asking for the reading. The RF fingerprint traditionally comprises RSSI values from each AP of the client 140 at the fingerprint location. However, the RF fingerprint can be used for other values like SNR and CSI information. The RF fingerprint is a capture of telemetry paired to the location at which it was taken.

In one embodiment, the locationing system 130 disclosed herein can automate fingerprint capture by using more accurate ranging procedures (or even allowing the client 140 to participate, e.g., in a wayfinding application) to supplement the exact location. As a result, the network can take a "fingerprint" automatically.

In some embodiments, the locationing system 130 uses pre-trained radiofrequency (RF) fingerprinting. RF fingerprinting techniques may require training on a smaller number of locations than a site survey does, and depending on the interpolation methods, the fewer training locations are more robust to ongoing network changes than a site survey. Some embodiments of RF fingerprinting capture the signal strength or other RF properties (such as SNR, data rates, channel state information, and derived analytics) of access points 120 and other fixed devices from a moving target training device. Others invert the measurements and obtain the location from the device but gather some or all of the measurements from the access points 120 measuring signal strength or other RF properties of the target device. In some embodiments, the location of the device is gathered by asking the target device user where they are on a map, where the user enters the location by some gesture such as clicking on their place in a floorplan. In some embodiments, the location is produced using GPS or other native locationing technology to the device itself, such as through a hosted web page that uses the Javascript Geolocation APIs and correlates the time of the geolocation with the traffic the access points 120 measure-including the access of the hosted web page itself. In some further embodiments, the hosted web page generates additional traffic, such as by uploading dummy traffic to the hosting server to force client 140 to increase its transmissions and improve the sampling. In some embodiments, the geolocation requests are piggybacked onto other websites, such as being integrated into a wayfinding application-whereby the use of the wayfinding application happens to train the system as a byproduct while also being an expected use of Geolocation APIs and thus encouraging the user to accept the location request-or by being injected into a statistical subset of the web traffic the user is requesting on their own. Further embodiments here use captive portal redirect tests (where the client 140 performs automatic HTTP requests, not encrypted, to test web endpoints to check for traffic redirection) to respond with geolocation web pages that automatically restore HTTP access after performing the measurements.

One embodiment of RF fingerprint interpolation uses RF-space to physical-space distance interpolation. Fingerprints are stored as (point in RF space, point in physical space) pairs, where the point in RF space is the signal strength measurements of the links between the training device and each measuring device in dBm. The proposed location in physical space is based on the weighted averaging of RF training physical space points based on the differences in RF space measurements. A naive method is to define the distance between two RF-space points as *D_{RF}*(*i,j*) = sqrt sum *k* (RSSI(i, *k*) - RSSI(*j*, *k*))² for each *k* that is defined for both *i* and *j*, with *D_{RF}* = infinity if there is no *k* in common. RSSI(i, *k*) is the signal strength in dBm between training point *i* and measuring device (such as access point) *k.* This essentially takes the vector of signal strength measurements as points in an Euclidean space and uses the Euclidean distance metric. Other distance functions use the exponential of the RSSIs, which mathematically approximates the path loss distance. Others resist the use of the Euclidean root-of-squares function because of dimensional catastrophe. The final proposed location *P*_{PROPOSED} = sum *j P(i) D_{RF}*(*i, j)* / *D_{RF-TOTAL},* where *D_{RF-TOTAL} =* sum *j D_{RF}*(*i, j*).

### 2.3 RANGING

In some embodiments, the network uses ranging. Some ranging uses active techniques, such as IEEE 802.11 Fine Timing Measurement and extensions or Bluetooth High Accuracy Distance Measurements and channel sounding (or combinations across protocols) to produce a statistical analysis of the clock deviations from the sender and receiver of a frame, thus measuring the time of flight (ToF) of the frame. If the transmission has a principal line-of-sight component-even through an attenuator-then typically, the shortest transmission time will be that of the line-of-sight component, thus producing the time of flight directly from the client 140 to the access point 120 (or reversed if the client allows.) In some embodiments, ranging uses passive techniques. Some embodiments use the passive technique of measuring the ACK interframe gap. Some embodiments make assumptions about the inter-frame gap. Others measure the inter-frame gap of the device (device fingerprinting) and thus can measure statistical deviations and assign those deviations to the time of flight. Methods are known to the art of overcoming device clock granularity issues, essentially performing super-resolution analysis by increasing the number of transmissions. Some embodiments use time of flight information extracted from channel state information (CSI). One method of doing this is to measure the change in the phase angle of subcarriers within a channel over the expected change. Subcarrier angles are expected to change based on the signal's time of flight: generally, the phase shift between two subcarriers at frequency *fᵢ* and *fⱼ* is 2π (*fⱼ - fᵢ*) *t,* where *t* is the time of flight. This is the principal source of phase shift in a line-of-sight environment. The start of CSI capture is subject to measurement uncertainties, from clock aliasing to uncertainty as to the onset of the training symbol being measured. However, across subcarriers, the sample time is usually the same within a radio, and therefore, the phase shift is consistently measured; thus, t may still be computed with reasonable accuracy, subject to super-resolution techniques and over multiple samples. (For this reason, the far smaller contribution to phase shift provided by the angle of arrival is successfully measurable in practice.)

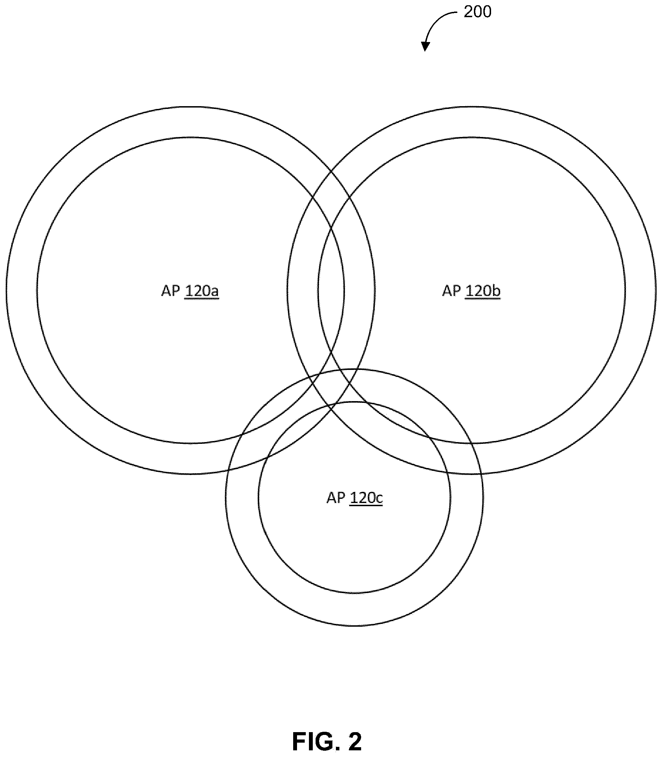

FIG. 2 illustrates an example of trilateration 200 with range and error. In some embodiments, the locationing system 130 uses ranging to perform trilateration (or best-fit multilateration or similar) of the client. Because ranging includes various sources of uncertainty-from clock error to non-line-of-sight contributions to timing, symmetry in network radio locations, to the uncertainty of those locations-the method for converting multiple ranges can influence the quality of the location produced. For example, the closer two range sources are together on the network side, the less information is contributed to the location. This is because if one pictures each range as a proposed circle at the range distance from the radio, plus or minus an error distance-a doughnut shape-the client's 140 location should overlap the doughnut shapes. Two adjacently centered doughnut shapes have an intersection whose area grows proportional to 1 / sin *a,* with *a* being the angle between the client 140 and the two doughnut centers. In a dense environment, where many more than three network radios are deployed-such as in the strip system in the 112 reference-there will usually be a mixture of adjacent (slight intervening client angle) and non-adjacent (intervening client angles closer to 90 degrees). In some embodiments, the locationing system 130 chooses the three ranges with the most orthogonality. In one embodiment, the choice is made by minimizing a statistical property of the difference between the intervening client angle and 90 degrees, such as minimizing the sum of the angles minus 90 degrees or minimizing the average or the maximum. In others, a statistical property of the various 1 / sin *a* is minimized.

In some other embodiments, more than three of the ranges are used. In one embodiment, the square of error is minimized between the candidate client location and the range distances measured. In another embodiment, the least square error contribution for each range is weighted by the degree of error of the range. For example, minimize the sum of (*wᵢ dᵢ*)², where *wᵢ* is the standard deviation error of the range *i,* and *dᵢ* is the difference between the distance between the candidate point ***x**ᵢ* and the radio center ***r**ᵢ*, x and r being vectors.

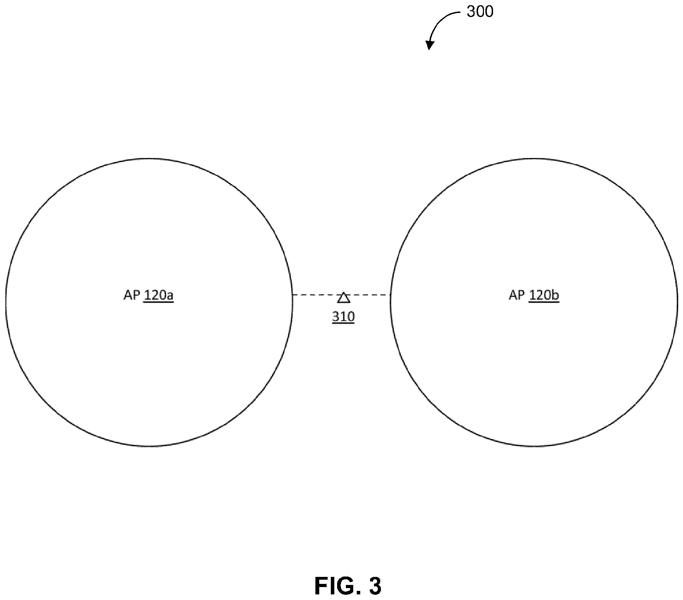

FIG. 3 illustrates examples of infeasible measurements 300. In some embodiments, the system detects infeasible measurements, such as that in FIG. 3. In some embodiments, each pairwise range is intersected, with the center of the infeasibility line segment between the range circles is taken as a candidate point 310. Then all of the pairwise candidate points are averaged together with a weighting, such as the inverse of the length of the infeasibility line segment.

### 2.4 CLIENT-PROVIDED INFORMATION

In some embodiments, the location the client 140 believes it is at is also harvested, such as with the previously mentioned techniques for RF fingerprinting using Geolocation API, etc. This allows client 140 to collect information from other sources-sometimes from existing geo-location systems installed in a building separate from the network performing the locationing.

### 2.5 AUTOMATED SITE SURVEY

Once the locations are produced for one or more clients 140 at one or more times, the system now has available information to compare the RSSIs and link quality information received and the locations available. The previous mechanism applies per client 140, and an oracle part merges the per-client data into predictions about the RF environment. This can be done by one client 140 moving around a lot, multiple clients 140 at once, or multiple clients 140 over time due to the automation effect. FIG. 4 illustrates an example of an automated surveying system 400.

The locationing system 130 may determine historical locations 440, ranges 450, fingerprints 460, location error 470, and client-reported locations 480. In some embodiments, the historical locations 440, including their source information, are recorded in a database. In some embodiments, the historical link quality information-such as RSSI 410, link quality 420, retransmit rate, link budget, CSI 430, and data rate-is stored for the same clients 140 simultaneously. In some embodiments, each data source is taken statistically; therefore, there is no guaranteed overlap of client identity and time.

The goal of surveying system 110 is to integrate the two data sources-link quality and location-to derive the channel quality at specific locations without requiring a person to cover the bulk of the floor in question intentionally.

When one does have a time-correlated (or within a window of acceptability, based on the speed of the client moving through space) location and channel quality metric, the combined data can be used to generate a deviation from the expected path loss.

In a typical manual site survey, the survey results contain a map correlating position on a floor with signal strength from the closest network radio or radios. This can be measured per band, per radio, or the like. As one can readily see, the locationing above has produced a position, and the concurrent RSSI 410 and link quality 420 are already available, so some embodiments introduce the data as a point on the map.

Maps made of points need to be interpolated and extrapolated. Some embodiments use nearest-neighbor interpolation to fill in the map. Log-linear decay can be used to reduce the link RSSI map towards negative infinity outside the convex hull of points. One possible advantage of using a client-based site survey by the embodiments disclosed herein is that the area outside of the convex hull is also necessarily an area where no client 140 has been seen. As such, the quality in this area may not matter. Other interpolation and extrapolation methods can also be used, including overall log-linear weighted interpolation of the points.

### 2.6 FORCING CORRELATION

In some embodiments, the correlation between location and channel state is forced.

In some embodiments, upon successful location detection, the network is triggered to survey the client's 140 channel quality. Some of that information may already be available: CSI-based ranging has the CSI 430 already; multilateration requires ranging estimates from multiple radios already; fingerprinting requires RSSI 410 estimates. Some information can also be gathered. In some embodiments, additional measuring network radios are informed (such as by the surveying system 110) to quickly jump to the channel the client 140 is on and perform any of the following: measure the RSSI 410 and link budget, measure the client's 140 data rates, measure the CSI 430 on receipt of information from the client 140, trigger the client 140 to transmit by sending it traffic, measure triggered downstream traffic for its own maximum data rate or other transmission properties based on the receipt of responses (such as ACKs). In some embodiments, the network radio of client 140 is associated with requests for survey information from client 140, such as with a Wi-Fi Beacon Report.

### 2.7 LEARNING CORRELATIONS THROUGH AN ORACLE

One of the great challenges with correlations is that it requires a coordinated network of radios to perform all necessary measurements to derive meaning at the given data point. Unfortunately, because of the multichannel models used by most wireless networks, it can be quite difficult to gain that correlation continuously without disturbing the network's normal operation. This happens, for example, when a network radio is asked to go off-channel to measure a client 140-at that point, it has to silence its associated clients 140 and do the scan. Thankfully, the network protocols (such as Wi-Fi) have mechanisms already in place to perform such channel departure without breaking the links of the associated clients 140. Nevertheless, real-time coordination is an intense burden.

Some embodiments circumvent this by introducing at least one oracle. In some embodiments, the oracle comprises a programmed digital electronic computing device between the locationing and surveying systems. In some embodiments, the oracle also subsumes the channel quality information. In some embodiments, an oracle is used to improve the quality of the ensemble of a particular measurement.

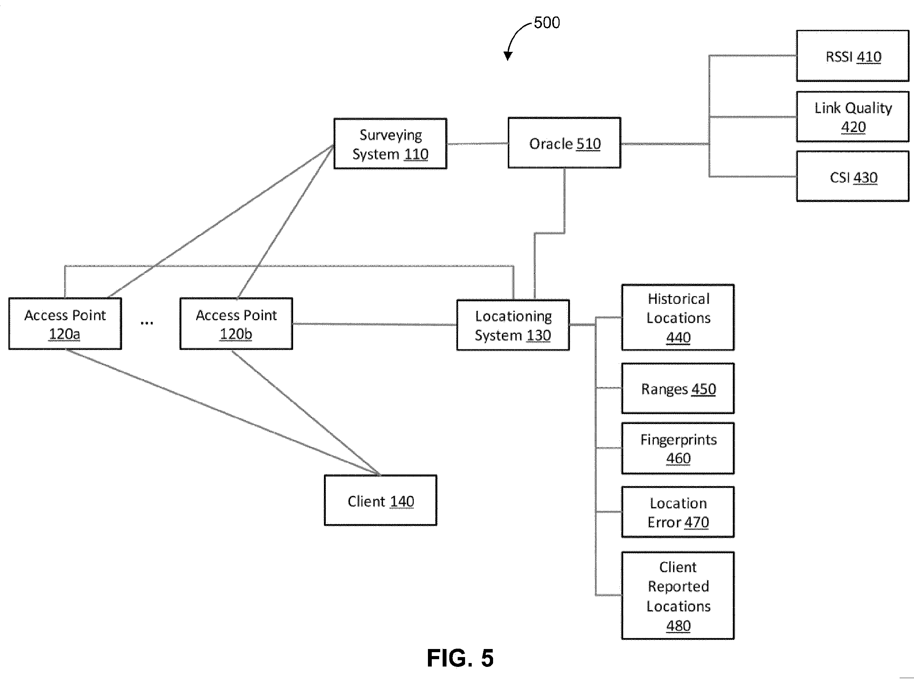

FIG. 5 illustrates an example system 500 with an oracle. An oracle 510, in this context, is a computing device or system that, when queried about a time and place, can return a reasonably accurate version of the data it is being queried about. In some ways, the oracle 510 can be programmed to effectively extrapolate or interpolate the data, but it might have to come up with some bounded, reasonable guess as to what happened.

### 2.8 PARTIAL RSSI ORACLE

### 2.8.1 NEIGHBOR TECHNIQUES

One embodiment uses neighbor techniques to fill in information. In a nearest-neighbor oracle 510, each measurement is recorded into the space as its own RF fingerprint. When an RSSI 410 measurement is provided with missing information, the known information is used, as above, with RF fingerprinting to find the closest point in that space. In an embodiment, this new point is instead returned as the fingerprint candidate. (Note that the distance function *D_{RF}* above is an example distance function that can take lost information, as the missing information belongs to a set of values that *k* will take on that can be skipped, thus contributing 0 to the sum. Conversely, a minimum distance (such as -100dBm) can be assumed for the unread values in a log-linear decay distance function. In some embodiments, the nearest neighbor interpolation is taken instead of the closest match.

In some embodiments, clusters are thinned. In one embodiment, a new point cannot be added to the model if it is less than a given distance from any existing point. In another embodiment, when two points are within the distance, a weighted average is taken to replace both points, again using the distance metric as the weighting factor (which is then to be normalized).

### 2.8.2 MACHINE LEARNING

Another embodiment has an oracle 510 based on machine-learning algorithms or models to predict a complete RSSI 410 measurement of a client 140 based on a partial RSSI 410 measurement. As an example and not by way of limitation, a partial RSSI 410 measurement may consist of a time series of RSSI 410 values, but for various timestamps, the signal strength value is missing. As another example and not by way of limitation, a partial RSSI 410 measurement indicates although *n* APs/sensors were in the range of the client 140, m APs/sensors (*m < n*) were heard, and some are missing. Partial RSSI 410 measurements happen at a given time for a given client 140 for a variety of reasons, including that measurements are delivered over the network and can be lost for being low priority, or radios that often can see a client may be off channel and unable to attend to the client 140, or the client 140 itself may disable its radio at the time of measurement to save battery.

For example, an oracle 510 that expands RSSI 410 information can be used to fill in the missing data in an RF fingerprint match.

One such oracle 510 is to use an autoencoder whose input and output are both in RF space (the adjacency vector, with RSSIs). The autoencoder can be trained on known full measurements, or it can be developed or partially additionally trained on previous measurements that could have missing data. In one embodiment, a training dataset with a size of 1000 may be enough in practice for learning the hyperparameters of the autoencoder. In another embodiment, a training dataset with a size of 10000 may be utilized. The training dataset may scale to many millions as systems run longer.

The goal of an autoencoder is to generally reduce the information to a latent space from within which reasonable predictions can be made. To see why this makes sense, imagine a perfect channel propagation model, which converts the device's location to the RSSIs 410 that would be received by each access point 120 for that device at that location. This would serve as a perfect decoder if the latent space were actual physical locations, and the ideal encoder would merely be the inverse of the propagation model. A trained autoencoder might not learn the exact physical space as the latent space. Still, the dimension reduction remains valid and trained autoencoders can learn to compress to a topologically connected space. In some embodiments, the autoencoder is a variational autoencoder, which places additional constraints on the topology and distribution of the latent space, forcing it to appear like Gaussian. This has the advantage of increasing connectedness.

In some embodiments, the architecture of an autoencoder begins with one single fully connected neural layer connected subsequently to a second dense layer with dimensions of the latent space to produce the latent space as an encoder model and another fully connected neural layer connected subsequently to a sigmoid layer as a decoder model. The overall autoencoder comprises an encoder model connected to a decoder model. The autoencoder may then be trained to reconstruct RSSIs 410. In some embodiments, the autoencoder may be configured using an Adam optimizer and given a reconstruction loss based on mean-squared error or cross-entropy. The training may also include normalizing the input data, vectorizing the input data, and training the autoencoder for several epochs. The autoencoder training may involve some configuration parameters such as latent dimensionality, ReLU size, batch size, epochs, etc. As an example and not by way of limitation, the latent dimensionality may be 2 to 4 or higher, the ReLU size may be 512, the batch size may be 128, and the epochs may be 250 or 500.

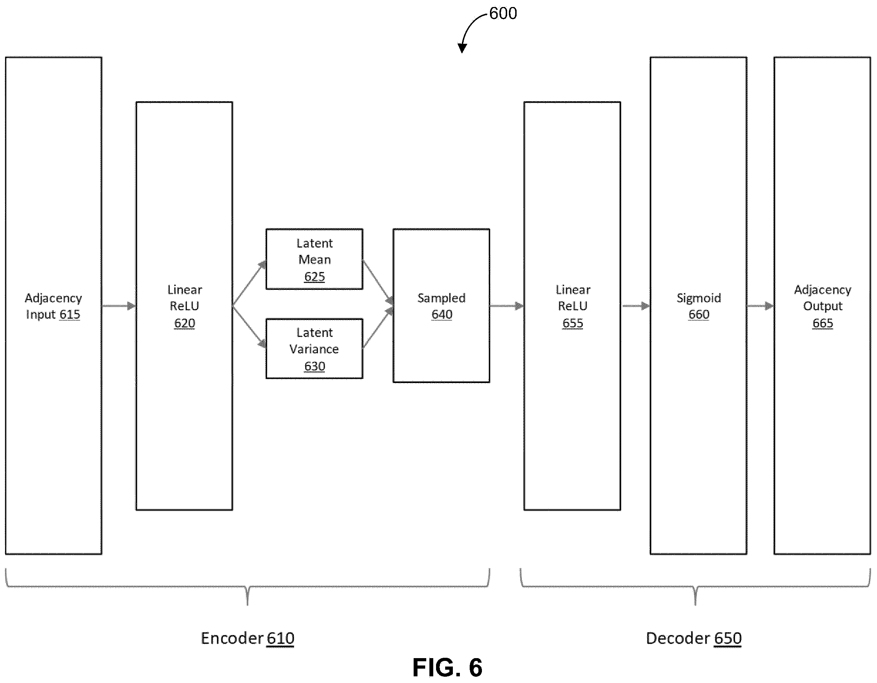

FIG. 6 illustrates an example of an architecture 600 of a variational autoencoder (VAE) oracle that could implement one embodiment. The architecture 600 may include an encoder 610 and a decoder 650. In the encoder 610, an adjacency input 615 may go through a linear ReLU 620, which may output a latent mean 625 and a latent variance 630. The latent mean 625 and latent variance 630 may be used together to generate sampled data 640. In the decoder 650, a linear ReLU 655 may process the sampled data 640. The output from the linear ReLU 655 may go through a Sigmoid function 660, which may further generate an adjacent output 665.

The adjacency input 615 is the RSSI vector, scaled from 0 to 1 for the sigmoid layer to be able to reproduce. In some embodiments, the adjacency input 615 is the concatenation of the scaled adjacency vector (with lacking information recorded as 0) and an equal-sized vector with 1 for the RSSI 410 being present and 0 for it being absent, thus letting the model have awareness of lacking information while still being able to use sigmoid reconstruction. In some embodiments, the pair (scaled RSSI, presence) for each access point 120 or sensor measurement is taken. As an example and not by way of limitation, a valid input may be [0.5, 1, 0.9, 1, 0, 0, 0.2, 1...], where the bold values represent the missing data. The output may be [0.5, 1, 0.9, 1, 0.6, 1, 0.2, 1...], where the missing data is added back.

In some embodiments, training is intentionally noised by taking higher quality information, altering it, and reintroducing it into training. Some noising operations are adding varying amounts of Gaussian noise to the RSSI 410, introducing additional deletions, introducing random but uniformly applied RSSI degradation to each client measurement vector (thus training on varying client power levels at the same position), and introducing time shear by merging close-in-time but different samples (averaging, jittering by selecting randomly each access point RSSI from one of the two samples, etc.).

One reason to use autoencoders is explainability. The latent space can be compared to the known connectedness of the RF space. For example, one can use the highest RSSI access point label to label the points in the latent space and measure for clustering properties.

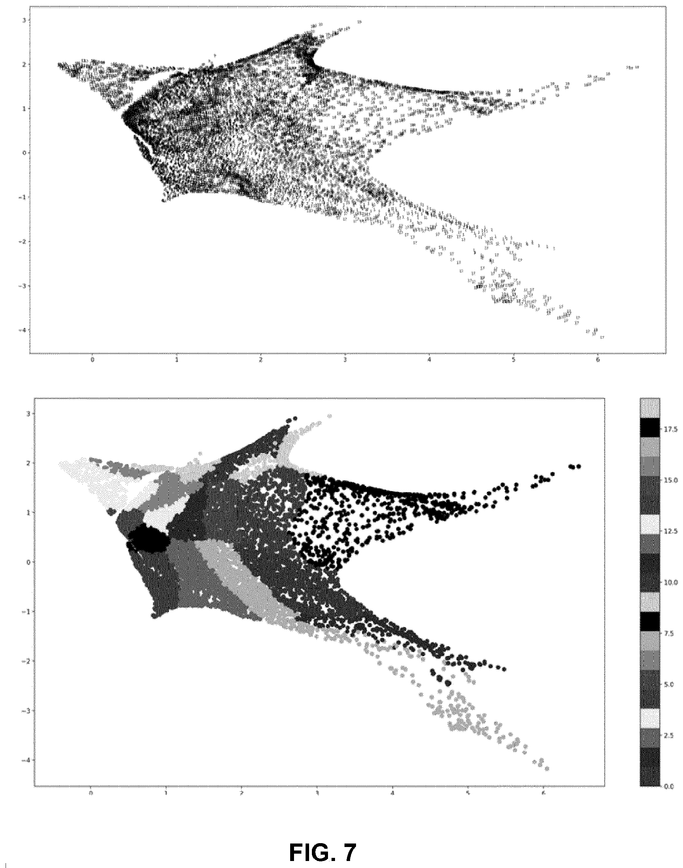

FIG. 7 illustrates an example visualization of the clustering of the latent space for an autoencoder. The autoencoder is trained on a 30-meter by 30-meter environment with 20 access points 120 within, based on 10k samples of client locations over time. The 20 access points 120 are indexed from 0 to 19, and each encoded point is labeled with the closest access point label. The autoencoder correctly retains the topological connectedness of adjacent points in space by being closest to the same access point. If the latent space were the real-world space (two-dimensional for this data set), the labeled areas would be Voronoi cells, thus showing that there is likely a nonlinear, nearly bijective transformation between the (unsupervised) latent space and the actual location space underlying the channel propagation model creating the adjacency matrices. Note that variational autoencoders with tightly weighted KL divergence error will collapse the space into a more symmetric Gaussian-like distribution. Other embodiments use different error functions, enforcing different latent shapes, as is known to the art.

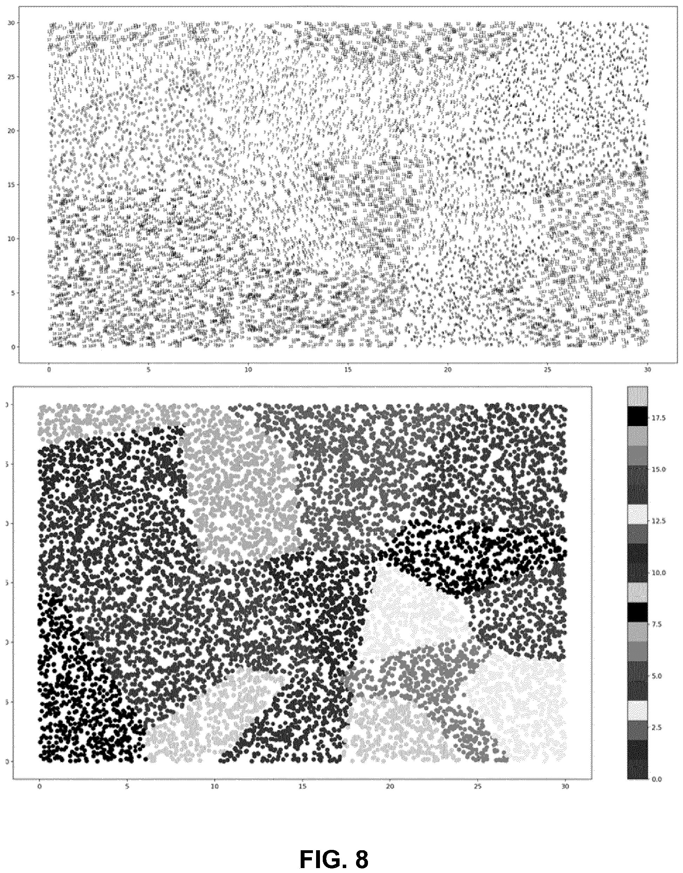

FIG. 8 illustrates example locations of sample points that generate the RF space through a known channel model. The example locations of the sample points are on a 30-meter by 30-meter grid that generated the RF space through a known channel model. As one can see, there is a bijective transformation between the learned algorithm's latent space and physical space-the algorithm re-derived physical space without prior knowledge. To see the transformation, rotate the physical space 180 degrees, and then one can see that the latent space has the same connectedness and differs only by stretching in places.

Note that missing information can cause pathological collapse cases. If only one RSSI 410 measurement is taken, the predicted locations will likely be clustered-possibly randomly-around the one network radio *k* that has taken the measurement. In some embodiments, oracle predictions are not requested-and measurements are therefore ignored at that point-when insufficient input information is given. In one embodiment, at least three simultaneous RSSI radio measurements from radios must exist to proceed with the prediction. In some ways, this enforces trilateration requirements out of the gate.

In some embodiments, the ReLU units are sized at a well-known value (such as 512). In some units, multiple ReLU deep units are layered. In some embodiments, the input space is a tagged subsample, encoding index (into row/column), and value as a joint embedded token. Various indexing methods are known to the art, including strict ones (such as values stored in separate multidimensional or adjacent one-dimensional input cells) or relative ones (such as sinusoidal embeddings as used within transformer architectures to tag token sequences). In some embodiments, the autoencoder dimensionality is 2. In others, it is four or higher. Some of these are hyperparameters, and in some embodiments, those hyperparameters are also trained, or at least tested with the best chosen, when there's a small search space and no practical way to do gradient descent. For these parameters, and especially for the dimensionality of the latent space, some embodiments do quick multi-class training of varying dimensions (such as from 2 to 10) based on a subset of known and substantial (low error) training data, performing the usual deletions and noising to see which one produces the lowest regeneration error in a multi-batch competitive training exercise.

In some embodiments, instead of merely a VAE, a transformer model is used. The inputs are as mentioned above for embeddings, where RSSI 410 measurements are produced into an embedding with the identity of the measurer, the time of the measurement, and the value of the measurement into a joint embedded. (Per the transformer architecture, Identity and time can be encoded sinusoidally in one embodiment.) The advantage of this model is that the self-attention of tokens allows the model to learn which more connected parts of the sparse measurement space (the large, sparse adjacency space that devolves into "threads" of connectivity at a large scale). This also results in an autogenerating oracle 510 that takes only a known or relevant subset of measurements and reproduces the rest of the context. By analogy, imagine a transformer dedicated to denoising text clips, removing spelling errors (thus errors in tokenization), and interleaved words or deletions (torn paper) in a forensic setting to recreate the missing context. Some embodiments train both to allow a large VAE that can fully encode the RF space and a transformer encoder that can remove noise given sparse inputs.

### 2.9 RANGING ORACLE

In some embodiments, the RSSI 410 predictions are instead replaced with ranged distances. The VAE operation is still the same: the input and output are vectors with a range in each row (assuming column vectors), and the row is indexed by the network radio label *k*. The neighbor techniques remain structurally the same, with the distance metric becoming a distance of actual distances.

### 2.10 COMBINED SIGNAL AND LOCATION ORACLE

In some embodiments, the RSSI (signal) oracle 510 is combined with location. This allows the benefit of using locations when they are available, and thus training the same model to perform locationing and channel prediction.

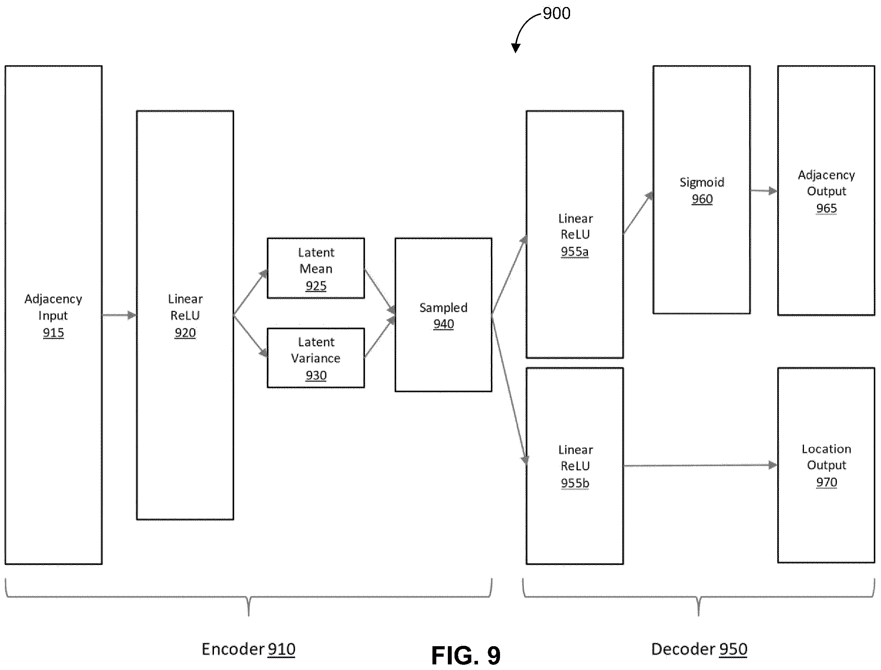

FIG. 9 illustrates an example cross-trained VAE 900 with location. The cross-trained VAE 900 may include an encoder 910 and a decoder 950. In encoder 910, an adjacent input 915 may go through a linear ReLU 920, which may output a latent mean 925 and a latent variance 930. The latent mean 925 and latent variance 930 may be used together to generate sampled data 940. In the decoder 950, a linear ReLU 955a may process the sampled data 940. The output from the linear ReLU 955a may go through a Sigmoid function 960, which may further generate an adjacent output 965. Another linear ReLU 955b may process the sampled data 940 to generate a location output 970.

There are multiple ways of introducing the cross prediction. In some embodiments, the location is cross-trained as a second decoder 950 in an autoencoder architecture. For training inputs with location known (via ranging or *a priori* such as access-point to access-point information when access points 120 are placed on a map during installation), the backpropagation runs jointly through both outputs, with combined loss function penalizing bad locations (such as mean squared error on each axis) as a part of the overall loss (added to the reconstruction loss and regularization such as KL divergence).

In some embodiments, the location input is also presented, thus retaining the entire autoencoding property of the model. Some loss functions may be improved by increasing the loss weight on the location values over the RSSI 410 values.

Some embodiments use a nested model, with an encoder 910 from adjacency to location, then location to latent space, and a decoder 950 first from latent to location and then from location to adjacency. This adds the ability to partially train encoders based on the data available while still allowing the latent space to be created.

One possible advantage of using location as a latent space input is that one can interpolate the latent space across a grid or other arrangement of points derived from physical space, thus showing the model's learned channel propagation behavior. When the locations are based on the results of the locationing system 130, an automated site survey is produced, showing the learned impairments of propagation. In some embodiments, the survey is made into a location to link budget output by assuming that the highest RSSI 410 in the predicted adjacency output is the one the client 140 would be assigned to if it were standing at that location, and use that highest one to produce the expected signal properties, such as data rate, goodness (based on, for example, expected minimum signal strength or data rate values), etc.

The net effect of this is that clients 140 can go along their way on their own, interacting with the environment, and the oracle 510 can use these clients 140 to further train the model, thus indirectly performing a site survey.

Thus, in some embodiments, the output of an oracle 510 that can produce RF predictions based on location (for example, through a specific predictor with location as input and RF space as output or through a decoder that produces join location/RF space outputs for a set of locations, with interpolation between the locations and RF space outputs) feeds the surveying system 110. In some embodiments, the surveying system 110 directly uses the oracle 510 to produce survey maps based on an array of locations of interest. In some embodiments, the locations of interest are derived from some property of historical locations, such as all locations recorded (maximum coverage), locations where clients have a minimum interactivity and demand on the backhaul network (true user coverage), locations where clients 140 are highly active (peak activity areas), locations where clients 140 have the most difficulty accessing the network such as based on loss rate or failure to establish a secure link (failure zones).

### 2.11 ARCHITECTURE

The algorithms can be implemented as centralized, distributed, or hybrid. The training and prediction locations can also be decoupled. In some embodiments, the training and prediction run on a cloud. In some embodiments, the trained model is sent to the prediction sites. In some embodiments, the predictions are fed into the UI of a wireless network monitoring system to produce maps; in further embodiments, the models and prediction engine are embedded in the UI. In some embodiments, the training is done centrally based on centralized telemetry. In some, local resources near the access points 120 are designated as "central" edge training sites, and at least the relevant telemetry needed for the domain in space or network topology of each site is provided to the training engine. In some embodiments, telemetry is exchanged between access points 120 (such as peer-to-peer wireline or wireless), and each access point 120 makes its own training decision.

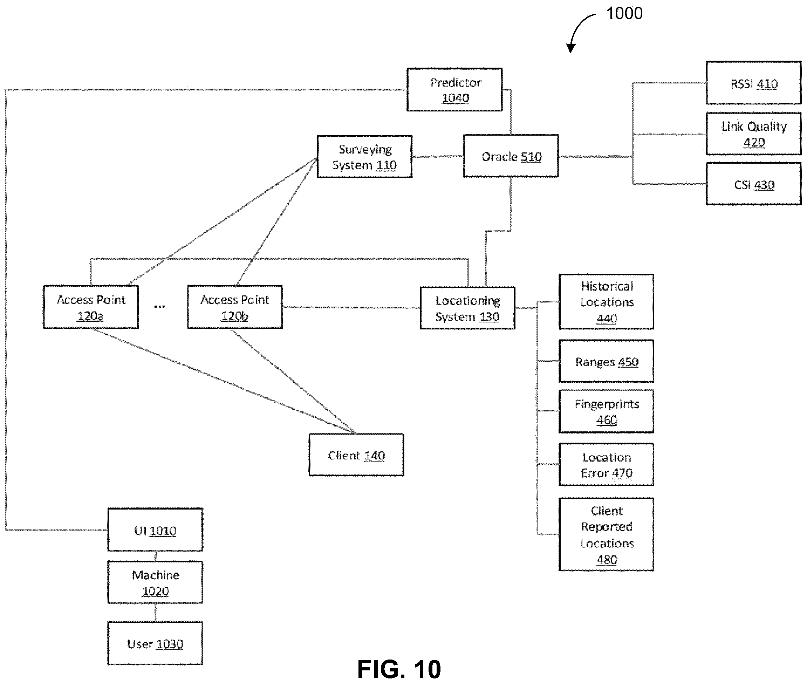

FIG. 10 illustrates an example system 1000 with a remote predictor. In FIG. 10, there is a user 1030 using a UI 1010 on a machine 1020, where the UI 1010 can exercise the oracle's 510 predictor 1040 remotely. In some embodiments, this results in the user 1030 asking questions about a particular location in real space-say as shown on a map or where clicked on said map--and the oracle 510 produces its expected link quality 420, CSI 430, RSSI 410, or other predicted state. In some embodiments, the autoencoder location is returned, thus being able to be visualized as an error tolerance ("3m error" versus "1m" error) and suggestions for increasing training resolution. One problem with the remote predictor 1040 is that the predictor 1040 has to be accessed over the network, and the visualizer in the UI 1010 may want to ask for plentiful visualizations and broad-ranging predictions.

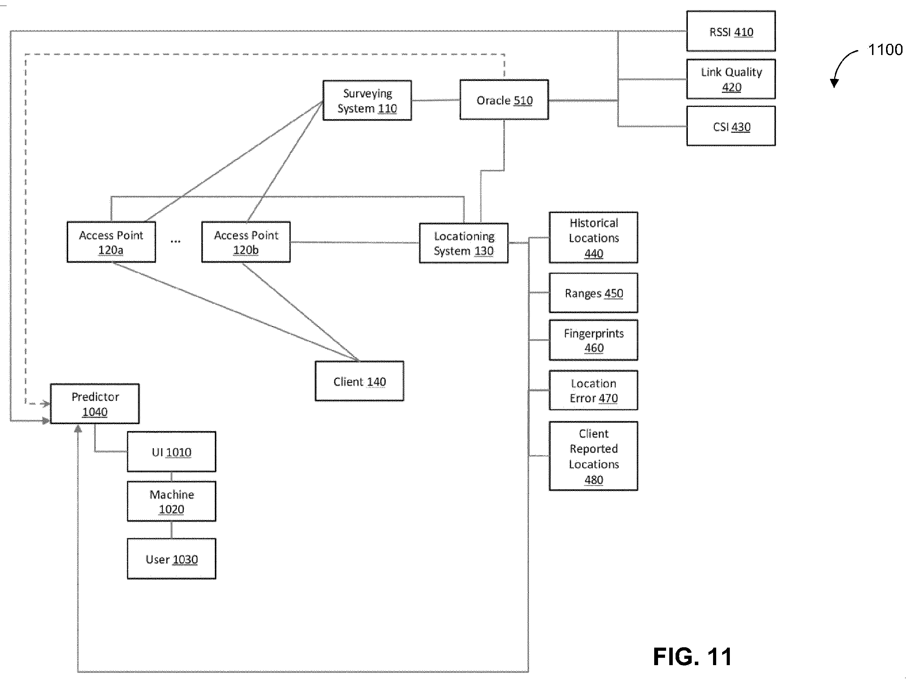

FIG. 11 illustrates an example relocation 1100 of the predictor to the user interface. The predictor 1040 is transmitted over the network into the UI 1010 for operation. A predictor 1040 is a trained model (in its entirety for autoencoders and just the encoder piece with support for non-auto encoders) that can be executed outside the training environment, farther from the training data. (The dashed line shows the predictor's 1040 motion while retaining a connection. For all arrows entering the predictor 1040, most embodiments prefer an HTTPS JSON-based API to communicate changes, updates, and desires for refreshes in the backward direction.)

In some embodiments, the predictor 1040 gains weight updates from the oracle 510 by communicating over the network, such as over an HTTPS JSON API informing weight alterations. This is delta patching. In other embodiments, predictors 1040 are treated monolithically but cheap to dispose of and replace.

The prediction step is usually computationally light compared to training so that it can run in reduced environments. In some embodiments, the predictor 1040 is run in JavaScript in the user's web browser, such as on TensorFlow.js. (TensorFlow.js and other tools may require pre-transformation of the model from, say, Keras .h5 to TFJS models, which can be done anywhere; one embodiment performs it at the oracle 510 side for HTTPS JSON exchanges to be native.). When running on the browser, the predictor can generate maps, visualizations, and reports in real-time, running predictions based on real-time state (input that may be consumed directly by the predictor, depending on the oracle embodiment, such as ranges and RSSI state.).

### 2.12 EXAMPLE USES OF THE PREDICTOR

In some embodiments, a map of attenuation against predicted signal strength is predicted. This map can be shaded with white/transparent for low attenuation against expected and darker values showing higher deviation. This produces a shadow map (or, if rendered by contour lines, a contour map) of the error vs naïve free space prediction. Some models mentioned above can even predict the area of attenuation. Intuitively, one can see it because they have no observations within attenuators (walls, equipment, etc.), which create voids in the prediction model. (Autoencoders' latent spaces often show tears or discontinuities when visualized against training data.). These tears themselves can be mapped, and the degree of attenuation is obtainable by contrasting projected rays from a known access point 120 and measuring the difference in either their actual measurements or projected measurements for the known access point 120 on either side of the void. The choice of ray chooses the measurement, which can be made multiply and averaged or statistically combined if the attenuator is desired to be treated as a uniform object. Otherwise, some embodiments do grid measurements and fill in pixel colors to highlight the varying thickness of auto-measured attenuators.

In some embodiments, the active locations of clients 140, as predicted by the oracle 510, are also shown on the map, creating a near real-time view of the objects' motions. Users can be seen wandering around the map live. A possibly more interesting view is produced where the density of clients 140 in a given area is visualized and reported, thus deriving occupancy statistics. With a long enough window of reporting, the overall occupancy tendency of a room can be shown. In some embodiments, occupancy analytics are combined with historical network performance analytics to show locations of high joint probability of occupancy and poor performance. This is meaningful as areas of low occupancy and poor performance are likely outside the coverage range and possibly not worth attending to.

### 3. IMPLEMENTATION EXAMPLE - HARDWARE OVERVIEW

According to one embodiment, the techniques described herein are implemented by at least one computing device. The techniques may be implemented in whole or in part using a combination of at least one server computer and/or other computing devices coupled using a network, such as a packet data network. The computing devices may be hard-wired to perform the techniques or may include digital electronic devices such as at least one application-specific integrated circuit (ASIC) or field programmable gate array (FPGA) that is persistently programmed to perform the techniques or may include at least one general purpose hardware processor programmed to perform the techniques pursuant to program instructions in firmware, memory, other storage, or a combination. To accomplish the described techniques, such computing devices may combine custom hard-wired logic, ASICs, or FPGAs with custom programming. The computing devices may be server computers, workstations, personal computers, portable computer systems, handheld devices, mobile computing devices, wearable devices, body-mounted or implantable devices, smartphones, smart appliances, internetworking devices, autonomous or semi-autonomous devices such as robots or unmanned ground or aerial vehicles, any other electronic device that incorporates hard-wired and/or program logic to implement the described techniques, one or more virtual computing machines or instances in a data center, and/or a network of server computers and/or personal computers.

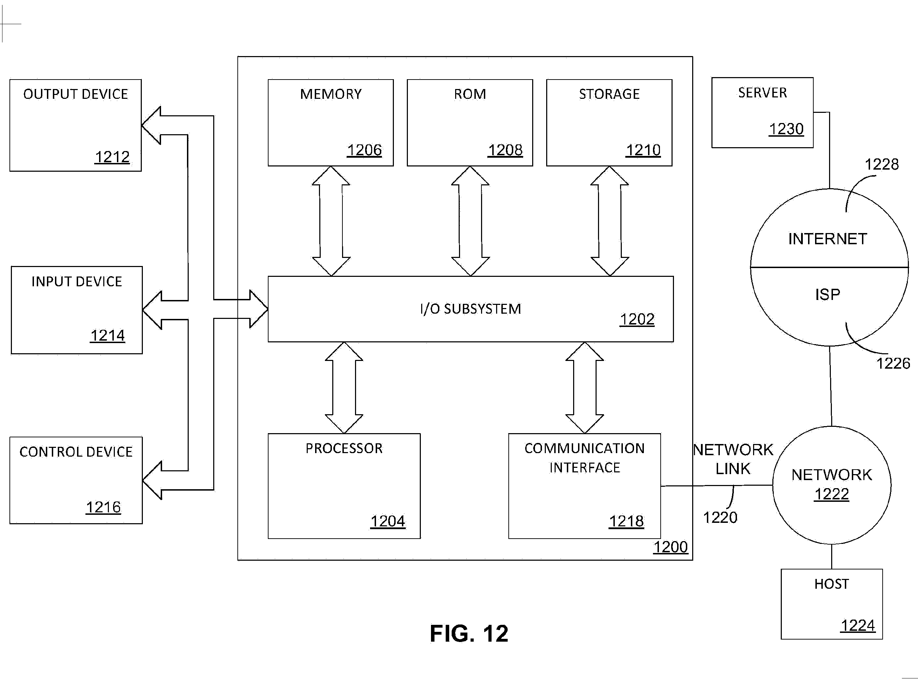

FIG. 12 is a block diagram that illustrates an example computer system with which an embodiment may be implemented. In the example of FIG. 12, a computer system 1200 and instructions for implementing the disclosed technologies in hardware, software, or a combination of hardware and software, are represented schematically, for example, as boxes and circles, at the same level of detail that is commonly used by persons of ordinary skill in the art to which this disclosure pertains for communicating about computer architecture and computer systems implementations.

Computer system 1200 includes an input/output (I/O) subsystem 1202, which may include a bus and/or other communication mechanism(s) for communicating information and/or instructions between the components of the computer system 1200 over electronic signal paths. The I/O subsystem 1202 may include an I/O controller, a memory controller, and at least one I/O port. The electronic signal paths are represented schematically in the drawings, such as lines, unidirectional arrows, or bidirectional arrows.

At least one hardware processor 1204 is coupled to I/O subsystem 1202 for processing information and instructions. Hardware processor 1204 may include, for example, a general-purpose microprocessor or microcontroller and/or a special-purpose microprocessor such as an embedded system or a graphics processing unit (GPU), or a digital signal processor or ARM processor. Processor 1204 may comprise an integrated arithmetic logic unit (ALU) or be coupled to a separate ALU.

Computer system 1200 includes one or more units of memory 1206, such as a main memory, coupled to I/O subsystem 1202 for electronically digitally storing data and instructions to be executed by processor 1204. Memory 1206 may include volatile memory such as various forms of random-access memory (RAM) or other dynamic storage device. Memory 1206 also may be used for storing temporary variables or other intermediate information during the execution of instructions to be executed by processor 1204. Such instructions, when stored in non-transitory computer-readable storage media accessible to processor 1204, can render computer system 1200 into a special-purpose machine customized to perform the operations specified in the instructions.

Computer system 1200 includes non-volatile memory such as read-only memory (ROM) 1208 or other static storage devices coupled to I/O subsystem 1202 for storing information and instructions for processor 1204. The ROM 1208 may include various forms of programmable ROM (PROM), such as erasable PROM (EPROM) or electrically erasable PROM (EEPROM). A unit of persistent storage 1210 may include various forms of non-volatile RAM (NVRAM), such as FLASH memory, solid-state storage, magnetic disk, or optical disks such as CD-ROM or DVD-ROM and may be coupled to I/O subsystem 1202 for storing information and instructions. Storage 1210 is an example of a non-transitory computer-readable medium that may be used to store instructions and data which, when executed by the processor 1204, cause performing computer-implemented methods to execute the techniques herein.

The instructions in memory 1206, ROM 1208, or storage 1210 may comprise one or more instructions organized as modules, methods, objects, functions, routines, or calls. The instructions may be organized as one or more computer programs, operating system services, or application programs, including mobile apps. The instructions may comprise an operating system and/or system software; one or more libraries to support multimedia, programming, or other functions; data protocol instructions or stacks to implement TCP/IP, HTTP, or other communication protocols; file format processing instructions to parse or render files coded using HTML, XML, JPEG, MPEG or PNG; user interface instructions to render or interpret commands for a graphical user interface (GUI), command-line interface or text user interface; application software such as an office suite, internet access applications, design and manufacturing applications, graphics applications, audio applications, software engineering applications, educational applications, games or miscellaneous applications. The instructions may implement a web server, web application server, or web client. The instructions may be organized as a presentation, application, and data storage layer, such as a relational database system using a structured query language (SQL) or no SQL, an object store, a graph database, a flat file system, or other data storage.

Computer system 1200 may be coupled via I/O subsystem 1202 to at least one output device 1212. In one embodiment, output device 1212 is a digital computer display. Examples of a display that may be used in various embodiments include a touchscreen display, a light-emitting diode (LED) display, a liquid crystal display (LCD), or an e-paper display. Computer system 1200 may include other type(s) of output devices 1212, alternatively or in addition to a display device. Examples of other output devices 1212 include printers, ticket printers, plotters, projectors, sound cards or video cards, speakers, buzzers or piezoelectric devices or other audible devices, lamps or LED or LCD indicators, haptic devices, actuators or servos.

At least one input device 1214 is coupled to I/O subsystem 1202 for communicating signals, data, command selections, or gestures to processor 1204. Examples of input devices 1214 include touch screens, microphones, still and video digital cameras, alphanumeric and other keys, keypads, keyboards, graphics tablets, image scanners, joysticks, clocks, switches, buttons, dials, slides, and/or various types of sensors such as force sensors, motion sensors, heat sensors, accelerometers, gyroscopes, and inertial measurement unit (IMU) sensors and/or various types of transceivers such as wireless, such as cellular or Wi-Fi, radio frequency (RF) or infrared (IR) transceivers and Global Positioning System (GPS) transceivers.

Another type of input device is a control device 1216, which may perform cursor control or other automated control functions such as navigation in a graphical interface on a display screen, alternatively or in addition to input functions. The control device 1216 may be a touchpad, a mouse, a trackball, or cursor direction keys for communicating direction information and command selections to processor 1204 and for controlling cursor movement on an output device 1212, such as a display. The input device may have at least two degrees of freedom in two axes, a first axis (e.g., x) and a second axis (e.g., y), that allows the device to specify positions in a plane. Another type of input device is a wired, wireless, or optical control device such as a joystick, wand, console, steering wheel, pedal, gearshift mechanism, or other control device. An input device 1214 may include a combination of multiple input devices, such as a video camera and a depth sensor.

In another embodiment, computer system 1200 may comprise an Internet of Things (IoT) device in which one or more of the output device 1212, input device 1214, and control device 1216 are omitted. Or, in such an embodiment, the input device 1214 may comprise one or more cameras, motion detectors, thermometers, microphones, seismic detectors, other sensors or detectors, measurement devices or encoders, and the output device 1212 may comprise a special-purpose display such as a single-line LED or LCD display, one or more indicators, a display panel, a meter, a valve, a solenoid, an actuator or a servo.

When computer system 1200 is a mobile computing device, input device 1214 may comprise a global positioning system (GPS) receiver coupled to a GPS module that is capable of triangulating to a plurality of GPS satellites, determining and generating geo-location or position data such as latitude-longitude values for a geophysical location of the computer system 1200. Output device 1212 may include hardware, software, firmware, and interfaces for generating position reporting packets, notifications, pulse or heartbeat signals, or other recurring data transmissions that specify a position of the computer system 1200, alone or in combination with other application-specific data, directed toward host computer 1224 or server computer 1230.

Computer system 1200 may implement the techniques described herein using customized hard-wired logic, at least one ASIC or FPGA, firmware, and/or program instructions or logic which, when loaded and used or executed in combination with the computer system, causes or programs the computer system to operate as a special-purpose machine. According to one embodiment, the techniques herein are performed by computer system 1200 in response to processor 1204 executing at least one sequence of at least one instruction contained in main memory 1206. Such instructions may be read into main memory 1206 from another storage medium, such as storage 1210. Execution of the sequences of instructions contained in main memory 1206 causes processor 1204 to perform the process steps described herein. In alternative embodiments, hard-wired circuitry may be used in place of or in combination with software instructions.

The term "storage media," as used herein, refers to any non-transitory media that store data and/or instructions that cause a machine to operate in a specific fashion. Such storage media may comprise non-volatile media and/or volatile media. Non-volatile media includes, for example, optical or magnetic disks, such as storage 1210. Volatile media includes dynamic memory, such as memory 1206. Common forms of storage media include, for example, a hard disk, solid state drive, flash drive, magnetic data storage medium, any optical or physical data storage medium, memory chip, or the like.

Storage media is distinct but may be used with transmission media. Transmission media participates in transferring information between storage media. For example, transmission media includes coaxial cables, copper wire and fiber optics, and wires comprising a bus of I/O subsystem 1202. Transmission media can also be acoustic or light waves generated during radio-wave and infrared data communications.

Various forms of media may carry at least one sequence of at least one instruction to processor 1204 for execution. For example, the instructions may initially be carried on a remote computer's magnetic disk or solid-state drive. The remote computer can load the instructions into its dynamic memory and send them over a communication link such as a fiber optic, coaxial cable, or telephone line using a modem. A modem or router local to computer system 1200 can receive the data on the communication link and convert the data to a format that can be read by computer system 1200. For instance, a receiver such as a radio frequency antenna or an infrared detector can receive the data carried in a wireless or optical signal, and appropriate circuitry can provide the data to I/O subsystem 1202, such as placing the data on a bus. I/O subsystem 1202 carries the data to memory 1206, from which processor 1204 retrieves and executes the instructions. The instructions received by memory 1206 may optionally be stored on storage 1210 either before or after execution by processor 1204.

Computer system 1200 also includes a communication interface 1218 coupled to a bus or I/O subsystem502. Communication interface 1218 provides a two-way data communication coupling to a network link(s) 1220 directly or indirectly connected to at least one communication network, such as a network 1222 or a public or private cloud on the Internet. For example, communication interface 1218 may be an Ethernet networking interface, integrated-services digital network (ISDN) card, cable modem, satellite modem, or a modem to provide a data communication connection to a corresponding type of communications line, for example, an Ethernet cable or a metal cable of any kind or a fiber-optic line or a telephone line. Network 1222 broadly represents a local area network (LAN), wide-area network (WAN), campus network, internetwork, or any combination thereof. Communication interface 1218 may comprise a LAN card to provide a data communication connection to a compatible LAN, a cellular radiotelephone interface that is wired to send or receive cellular data according to cellular radiotelephone wireless networking standards, or a satellite radio interface that is wired to send or receive digital data according to satellite wireless networking standards. In any such implementation, communication interface 1218 sends and receives electrical, electromagnetic, or optical signals over signal paths that carry digital data streams representing various types of information.

Network link 1220 typically provides electrical, electromagnetic, or optical data communication directly or through at least one network to other data devices, using, for example, satellite, cellular, Wi-Fi, or BLUETOOTH technology. For example, network link 1220 may connect through network 1222 to a host computer 1224.

Furthermore, network link 1220 may connect through network 1222 or to other computing devices via internetworking devices and/or computers operated by an Internet Service Provider (ISP) 1226. ISP 1226 provides data communication services through a worldwide packet data communication network called Internet 1228. A server computer 1230 may be coupled to Internet 1228. Server computer 1230 broadly represents any computer, data center, virtual machine, or virtual computing instance with or without a hypervisor or computer executing a containerized program system such as DOCKER or KUBERNETES. Server computer 1230 may represent an electronic digital service that is implemented using more than one computer or instance, and that is accessed and used by transmitting web services requests, uniform resource locator (URL) strings with parameters in HTTP payloads, API calls, app services calls, or other service calls. Computer system 1200 and server computer 1230 may form elements of a distributed computing system that includes other computers, a processing cluster, a server farm, or other organizations of computers that cooperate to perform tasks or execute applications or services. Server computer 1230 may comprise one or more instructions organized as modules, methods, objects, functions, routines, or calls. The instructions may be organized as one or more computer programs, operating system services, or application programs, including mobile apps. The instructions may comprise an operating system and/or system software; one or more libraries to support multimedia, programming, or other functions; data protocol instructions or stacks to implement TCP/IP, HTTP, or other communication protocols; file format processing instructions to parse or render files coded using HTML, XML, JPEG, MPEG or PNG; user interface instructions to render or interpret commands for a graphical user interface (GUI), command-line interface or text user interface; application software such as an office suite, internet access applications, design and manufacturing applications, graphics applications, audio applications, software engineering applications, educational applications, games or miscellaneous applications. Server computer 1230 may comprise a web application server that hosts a presentation layer, application layer, and data storage layer, such as a relational database system using a structured query language (SQL) or no SQL, an object store, a graph database, a flat file system or other data storage.

Computer system 1200 can send messages and receive data and instructions, including program code, through the network(s), network link 1220, and communication interface 1218. In the Internet example, server computer 1230 might transmit a requested code for an application program through Internet 1228, ISP 1226, local network 1222, and communication interface 1218. The received code may be executed by processor 1204 as it is received and/or stored in storage 1210 or other non-volatile storage for later execution.

The execution of instructions, as described in this section, may implement a process in the form of an instance of a computer program that is being executed and consisting of program code and its current activity. Depending on the operating system (OS), a process may be made up of multiple threads of execution that execute instructions concurrently. In this context, a computer program is a passive collection of instructions, while a process may be the actual execution of those instructions. Several processes may be associated with the same program; for example, opening up several instances of the same program often means more than one process is being executed. Multitasking may be implemented to allow multiple processes to share processor 1204. While each processor 1204 or core of the processor executes a single task at a time, computer system 1200 may be programmed to implement multitasking to allow each processor to switch between tasks that are being executed without having to wait for each task to finish. In an embodiment, switches may be performed when tasks perform input/output operations when a task indicates that it can be switched or on hardware interrupts. Time-sharing may be implemented to allow fast response for interactive user applications by rapidly performing context switches to provide the appearance of concurrent execution of multiple processes. In an embodiment, for security and reliability, an operating system may prevent direct communication between independent processes, providing strictly mediated and controlled inter-process communication functionality.

### 4. ALTERNATIVES AND VARIATIONS

Throughout this disclosure, multiple inventions are listed that are either separate or derived from other inventions in this disclosure. It is to be understood that the combinations and subprocesses of these inventions are also taught by this disclosure, as the combinations and subprocesses are able to be anticipated by those skilled in the art upon and only upon reading this disclosure. Furthermore, uses of the plural or the singular do not restrict the number of the item being mentioned: unless explicitly called out as not being so or being logically inconsistent, mentions of singular items are to be construed to also be plural and vice versa.

Furthermore, the use of Linux-specific terms, such as wiphy, cfg80211, and the like, are not to be construed as limiting the application to Linux operating systems but instead are references to some preferred embodiments. Similarly, the mention of Wi-Fi does not limit the application to Wi-Fi radios only; other technologies, such as 5G, CBRS, millimeter-wave, and software-defined radio technologies, are easily understood to be implementable from the teachings in this disclosure. Wi-Fi is a trademark of the Wi-Fi Alliance.

Throughout this disclosure, multiple alternative embodiments are listed. Each embodiment differs in tradeoffs or effects and, as such, is the best embodiment for that set of tradeoffs and effects. The choice of alternative to use depends on the tradeoffs or effects desired by an implementer skilled in the art, and such choice is obvious and straightforward within the art and requires no further invention or discovery. Conditional language such as "could," "can," and "may" are intended to refer to and are to be construed as referring to options (manufacture, configuration, or based on availability) within embodiments of the invention and do not state that additional invention is required. For example, the statement that "the invention can react to a given input" means that one configuration of one assembly of an embodiment of the present invention does indeed react to that input. This is done for linguistic economy only and does not suggest uncertainty or incompleteness as it relates to the invention being taught or otherwise. This disclosure does not speculate as to the future state of the art; it states a current invention that has been reduced to practice. Examples are provided as explicit embodiments of the invention, as well as to elucidate the teaching.

This disclosure lists sufficient details to enable those skilled in the art to construct a system around or a technology using the novel methods of the contained inventions without further discovery or invention.

In the foregoing specification, embodiments of the invention have been described with reference to numerous specific details that may vary from implementation to implementation. Accordingly, the specification and drawings are to be regarded in an illustrative rather than a restrictive sense. The sole and exclusive indicator of the scope of the invention, and what is intended by the applicants to be the scope of the invention, is the literal and equivalent scope of the set of claims issued from this application in the specific form in which such claims issue, including any subsequent correction.

## Claims

1. A computer-implemented method for performing a radio frequency (RF) site survey comprising:
using a computer system, detecting a physical location of a client device based on RF state information from one or more wireless networking access points;
by the computer system, creating and storing location data representing the physical location of the client device;
by the computer system, integrating network link quality information and the location data to derive a channel quality value representing a quality of an RF communication channel at the physical location; and
by the computer system, generating a first map correlating the physical location with a signal strength based on the channel quality value associated with the physical location.

2. The computer-implemented method of claim 1, further comprising, by the computer system, detecting the physical location of the client device based on one or more of RF fingerprinting, ranging, or information from the client device.

3. The computer-implemented method of any preceding claim, further comprising, by the computer system, deriving the channel quality value at the physical location based on one or more of channel state information, a ranging estimate, a received signal strength indicator (RSSI) estimate, a RSSI budget, a link budget, a data rate associated with the client device, a maximum data rate associated with a downstream traffic from the client device, or survey information from the client device.

4. The computer-implemented method of any preceding claim, further comprising, by the computer system, correlating the physical location with the signal strength using an oracle comprising a programmed digital electronic computing device, wherein the oracle subsumes the quality of the RF communication channel at the physical location, and wherein the oracle is configured for an ensemble of a particular measurement.

5. The computer-implemented method of any preceding claim, wherein the network link quality information is partial, and the computer-implemented method further comprising, by the computer system, completing the network link quality information based on one or more of a neighboring algorithm or a machine-learning algorithm.

6. The computer-implemented method of claim 5, further comprising, by the computer system, completing the network link quality information by executing an inference stage of a trained machine-learning model over the network link quality information, wherein the trained machine-learning model comprises an autoencoder.

7. The computer-implemented method of any preceding claim, further comprising, by the computer system, generating a second map comprising attenuation against the signal strength.

8. The computer-implemented method of any preceding claim, further comprising, by the computer system, displaying the first map via a user interface executing on a monitoring system.

9. A computer system for performing a radio frequency (RF) site survey, comprising:
one or more central processing units;
one or more network interfaces that are configured to communicatively couple the one or more central processing units to a data communication network; and
electronic digital random access memory storing a plurality of sequences of stored program instructions being programmed to:
detect a physical location of a client device based on RF state information from one or more wireless networking access points;
create and store location data representing the physical location of the client device;
integrate network link quality information and the location data to derive a channel quality value representing a quality of an RF communication channel at the physical location; and
generate a first map correlating the physical location with a signal strength based on the channel quality value associated with the physical location.

10. The computer system of claim 9, the plurality of sequences of stored program instructions being further programmed to detect the physical location of the client device based on one or more of RF fingerprinting, ranging, or information from the client device.

11. The computer system of any one of claims 9 - 12, the plurality of sequences of stored program instructions being further programmed to derive the channel quality value at the physical location based on one or more of channel state information, a ranging estimate, a received signal strength indicator (RSSI) estimate, a RSSI budget, a link budget, a data rate associated with the client device, a maximum data rate associated with a downstream traffic from the client device, or survey information from the client device.

12. The computer system of any one of claims 9 - 12, the plurality of sequences of stored program instructions being further programmed to correlate the physical location with the signal strength using an oracle comprising a programmed digital electronic computing device, wherein the oracle subsumes the quality of the RF communication channel at the physical location, and wherein the oracle is configured for an ensemble of a particular measurement.

13. The computer system of any one of claims 9 - 12, wherein the network link quality information is partial, the plurality of sequences of stored program instructions being further programmed to complete the network link quality information based on one or more of a neighboring algorithm or a machine-learning algorithm.

14. The computer system of claim 13, the plurality of sequences of stored program instructions being further programmed to complete the network link quality information by executing an inference stage of a trained machine-learning model over the network link quality information, wherein the trained machine-learning model comprises an autoencoder.

15. One or more non-transitory computer-readable storage media storing one or more sequences of instructions which, when executed using one or more processors, cause the one or more processors to execute the computer-implemented method according to any one of claims 1 - 8.
